# NEUE EUROPÄISCHE PATENTSCHRIFT

(11) **EP 0 770 757 B2**
(45) Veröffentlichungstag und Bekanntmachung des Hinweises auf die Entscheidung über den Einspruch: **15.12.2010**
(45) Hinweis auf die Patenterteilung: 02.01.2004
(21) Anmeldenummer: 96117186.5
(22) Anmeldetag: 25.10.1996
(51) Int. Cl.: E06B 9/68, E06B 9/88

(54) **Verfahren zum Antreiben von elektromotorisch betriebenen Markisen oder dergleichen**
Method of actuating awnings or the like by an electric motor
Méthode pour actionner des vélums ou des choses pareilles par moteur électrique

(30) Priorität: 28.10.1995 DE 19540302
(43) Veröffentlichungstag der Anmeldung: 02.05.1997
(73) Patentinhaber: elero GmbH, 72660 Beuren (DE)
(72) Erfinder: Wolfer, Hermann, 73252 Lenningen-Gutenberg (DE); Walddörfer, Dieter, 73252 Lenningen-Unterlenningen (DE)
(74) Vertreter: Patentanwälte Westphal, Mussgnug & Partner

(56) Entgegenhaltungen:
- EP-A- 0 381 643
- EP-A- 0 671 542
- EP-A- 0 678 646
- WO-A-92/11432
- DE-A- 3 425 874
- DE-A- 4 230 729
- DE-A- 4 440 449
- DE-U- 9 217 254

## Beschreibung

Die Erfindung betrifft ein Verfahren zum Antreiben von elektromotorisch betriebenen Markisen oder dergleichen gemäß dem Oberbegriff des Anspruchs 1.

Ein solches Verfahren ist aus EP 0 381 643 A1 bekannt.

Bei elektrisch betriebenen Rolläden, Rolltoren, Jalousien, Markisen, Filmleinwänden oder dergleichen werden in bekannter Weise über einstellbare mechanische Begrenzungsendschalteinrichtungen die gewünschten Endpositionen eingestellt. Beispiele solcher Antriebe sind aus DE 30 11 706 C2 und DE 44 02 524 C2 bekannt. Bei diesen bekannten Antrieben wird die Antriebswelle des Antriebs über sogenannte Wellen-Endschalter in einer oberen und unteren Endlage angehalten.

Aus EP 0 671 542 B1 ist ein weiteres Verfahren zum Antrieb eines Rolladen bekannt. Dort wird das Blockieren des Motors in einem durch einen Schalter definierten Restweg des Verfahrenbereichs des Rolladen erkannt. In diesem Restweg wird der Antrieb mit einem geringeren Drehmoment betrieben, um das Anschlagen des Rolladens zu mildern.

Aus DE 44 40 449 A1 ist ein Verfahren zur elektronischen Stillstandssteuerung solcher elektromotorischer Antriebe beschrieben, bei denen die mechanischen Wellen-Endschalter entbehrlich sind. Als Abschaltkriterium dient bei diesem Verfahren das Drehmoment bzw. die Drehmomentänderung des Elektromotors. Das Drehmoment des Elektromotors wird bei eingeschaltetem Elektromotor laufend elektronisch erfaßt und der Elektromotor bei Überschreitung eines vorgegebenen Drehmomentes abgeschaltet. Zur Erfassung des Drehmomentes wird die Phasenverschiebung des durch mindestens zwei Motorwicklungen fließenden Stromes ausgewertet. Ein elektromotorischer Antrieb für Rolläden oder dgl., der nach diesem Verfahren arbeitet, zeichnet sich durch einen sehr einfachen Aufbau und eine automatische Endlagenerkennung aus. Darüber hinaus ist ein sicherer Schutz vor Beschädigungen des Rolladens oder dgl. möglich.

Es hat sich jedoch in der Praxis gezeigt, daß insbesondere bei solchen Antrieben, die ein Textil aufspannen, also Markisen oder dgl., Probleme auftreten. Das vom Elektromotor aufzuwickelnde Textiltuch kann nämich beispeilsweise durch Umwelteinflüsse im Laufe der Zeit gedehnt werden, was dazu führt, daß dieses "längere Textiltuch" bei vollständigem Ausfahren des Antriebes in unerwünschter Weise durchhängt, wie dies insbesondere bei Markisen, die in längerem Gebrauch sind, auftreten kann. Eine Lösung hierfür ist in der eingangs genannten EP 0 381 643 A1 angegeben.

Die EP 0 381 643 A1 beschreibt, dass die Belastung des Elektromotors überwacht und je Umdrehung des Elektromotors eine vorgegebene Anzahl von Impulsen generiert wird, dass der Elektromotor beim Ausfahren der Markise oder dgl. dann abgeschaltet wird, sobald in einer Zählereinrichtung eine vorgegebene, die Endstellung festlegende Impulszahl gezählt ist, und dass der Elektromotor beim Einfahren abgeschaltet und die Zählereinrichtung rückgesetzt wird; sobald ein Belastungssprung am Elektromotor detektiert wird.

Das bekannte Verfahren beruht also im wesentlichen darauf zu detektieren, beispielsweise durch Überwachen der Belastung des Elektromotors, wann der Elektromotor gegen einen mechanischen Anschlag an der Anfangsstellung der Markise oder dgl. läuft. Der Elektromotor schaltet dann, gesteuert von einer Steuereinrichtung, selbsttätig ab und setzt die interne Zählereinrichtung zurück. Bei einer Bewegung in Gegenrichtung, also beim Ausfahren der Markise oder dgl., werden je Umdrehung eine bestimmte Anzahl von Impulsen gezählt und nach Erreichen eines programmierbaren Sollwertes von Impulsen, welcher der Endstellung der Markise oder dgl. entspricht, der Elektromotor abgeschaltet. Durch das Rücksetzen, vorzugsweise Nullsetzen, der Zählereinrichtung am Anschlag und damit in Anfangsstellung der Markise oder dgl., reguliert der Elektromotor eine eventuell auftretende Tuchlängenveränderung der Markise oder dgl. selbsttätig bei der nächsten Bewegung aus.

Das bekannte Verfahren eignet sich insbesondere zum Antreiben unterschiedlichster Markisen (z.B. Gelenkarm-Markisen, Kassetten-Markisen, Hülsen-Markisen, Fassaden-Markisen, Markisoletten, Fallarm-Markisen und Senkrecht-Markisen), Leinwände, Wintergartenbeschattungen u.ä. Des weiteren ist das bekannte Verfahren auch zum Antreiben von elektromotorisch betriebenen Rolläden, Rolltoren, Gegenzuganlagen, Klappläden oder dergleichen geeignet, wenn bei diesen Antrieben zu befürchten ist, dass die angetriebenen Gegenstände Längenänderungen aufgrund von Umwelteinflüssen o.ä. erfahren. Problematisch bei den bekannten Verfahren ist die Tatsache, dass Falschmeldung erzeugt werden, wenn der Motor z.B. aufgrund eines Belastungssprungs (wie z.B. eine auftretende Windböe oder ein anderes Hindernis) abgeschaltet und fälschlicherweise eine Belastungsüberschreitung detektiert wird. Die Steuerung meint nämlich dann, dass sich die Markise im voll eingefahrenen Zustand befindet und setzt fälschlicherweise den Zählerstand zurück. Beim nächsten Ausfahren der Markise führt dies dazu, dass die Markise nur unvollständig ausfahren kann.

Der Erfindung liegt die Aufgabe zugrunde, diese Nachteile zu vermeiden und auch bei kurzen auftretenden Belastungssprüngen einen korrekten Betrieb der Steuereinrichtung zu ermöglichen.

Diese Aufgabe wird durch die Merkmale des Anspruchs 1 gelöst.

Gemäß der Erfindung ist vorgesehen, dass die Belastungsüberwachung, die vorzugsweise eine Drehmomentüberwachung des Elektromotors ist, während der Hin- und Rückfahrt der Markise oder dgl. ausgeblendet und erst bei Einfahren der Markise oder dgl. kurz vor Erreichen der Anfangsstellung aktiviert wird. Dies hat den Vorteil, dass ein kurzer Belastungssprung, der beispielsweise durch eine Windböe o.ä. an der Markise ausgelöst wird, den Elektromotor nicht zum vorzeitigen Abschalten bringen kann. Durch Aktivieren der Belastungsüberwachung erst kurz vor Erreichen der Anfangsstellung der Markise oder dgl. wird sichergestellt, dass erst das Anschlagen der Markise an der Anfangsstellung zu einem Rücksetzvorgang an der Zählereinrichtung führt.

Eine besonders einfache Weise, die Belastung und damit das Drehmoment des Elektromotors zu erfassen, besteht darin, die Phasenverschiebung des durch Phasenwicklungen des Elektromotors fließenden Stromes auszuwerten. Verfügt der Elektromotor über mindestens zwei Phasenwicklungen und einen Motorkondensator, so kann aus der Phasenverschiebung des durch diese zwei Phasenwicklungen fließenden Stromes auf das aktuelle Drehmoment des Elektromotors rückgeschlossen werden. Eine geringe Phasenverschiebung deutet auf eine starke Belastung und eine hohe Phasenverschiebung auf eine geringe Belastung und damit ein geringes Drehmoment des Elektromotors hin. Ein Belastungssprung, wie er beim Anschlagen der Markise oder dgl. an einem Anschlag beim Erreichen der Anfangsstellung zu beobachten ist, macht sich durch eine deutliche Änderung des Phasenverschiebungswinkels bemerkbar, der ohne weiteres in der Steuereinrichtung detektierbar ist und als Erreichen der Anfangsposition der Markise oder dgl. herangezogen wird.

Durch Erfassen der Phasenverschiebung kann vorteilhafterweise auf einen separaten Sensor zur Drehzahl- bzw. Drehmomenterfassung verzichtet werden. Ein einfacher Aufbau der Vorrichtung zur Durchführung des erfindungsgemäßen Verfahrens ist die Folge.

Nach der Erfindung ist eine Überwachungseinrichtung (Watch-Dog-Schaltung) vorgesehen, welche von den Impulsen, die bei der Drehung des Elektromotors erzeugt werden, getriggert wird. Sobald eine vorgegebene Drehgeschwindigkeit als unterschritten detektiert wird, wird der Elektromotor ebenfalls abgeschaltet und die augenblicklichen Wegstreckendaten in eine nichtflüchtige Speichereinrichtung, z.B. ein EEPROM, eingeschrieben. Dies stellt sicher, daß der Elektromotor beim Auflaufen auf ein unvorhergesehenes Hindernis auch abschaltet. Da die Wegstreckendaten, d.h. der augenblickliche Zählerstand, und zumindest der die Endstellung festlegende Zählerwert sowie vorzugsweise ein die augenblickliche Drehrichtung anzeigendes Kontrollbit in der nichtflüchtigen Speichereinrichtung abgelegt werden, kann selbst bei einem Abschalten des Elektromotors bzw. bei Stromausfall nach Entfernung des Hindernisses die Markise ungehindert bis zu der gewünschten Endstellung fahren, wobei diese Endstellung auch exakt erreicht wird, weil die vor Erreichen des Hindernisses aktuellen Wegstreckendaten der Steuereinrichtung vom nichtflüchtigen Speicher zur Verfügung gestellt werden.

Es hat sich als zweckmäßig erwiesen, daß nach einem erfolgten Anhaltevorgang des Elektromotors eine Drehrichtungssperre aktiviert wird. Die Drehrichtungssperre sorgt dafür, daß der Elektromotor nach dem Abschalten ausschließlich in die zur unmittelbar vor dem Abschalten entgegengesetzte Richtung bewegbar ist.

Die in Abhängigkeit von der Drehbewegung des Elektromotors notwendige Impulserzeugung kann gemäß einer Weiterbildung der Erfindung dadurch realisiert werden, daß der Elektromotor ein magnetisches Polrad antreibt, welches bei Drehung an einem Ausgang einer im Bereich des Polrades angeordneten Sensoreinrichtung, z.B. ein Hall-Sensor, eine Impulsfolge erzeugt. Die Genauigkeit der Weglängenmessung ist natürlich umso höher, je mehr Impulse pro Umdrehung des Elektromotors beim Ausgang der Sensoreinrichtung erzeugt werden.

Wesentlich bei dem erfindungsgemäßen Verfahren ist, daß die Zählereinrichtung immer dann rückgesetzt, also auf Null gesetzt, wird, wenn die Markise oder dgl. in der Anfangsstellung auf Anschlag läuft, was anhand der Belastungsänderung detektiert wird. Wird die Markise während des Ein- oder Ausfahrvorganges aufgrund eines im Wege befindlichen Hindernisses angehalten, sorgt zwar die Steuereinrichtung dafür, daß die Bestromung des Elektromotors aus Sicherheitsgründen unterbrochen wird. Hierbei wird jedoch die Zählereinrichtung nicht zurückgesetzt, sondern vielmehr der augenblickliche Zählerstand in der nichtflüchtigen Speichereinrichtung abgespeichert.

Darüber hinaus ist es für das erfindungsgemäße Verfahren von entscheidender Bedeutung, daß beim Anlaufen des mechanischen Anschlages in der Anfangsstellung der Markise oder dgl. der Zählwert der Zählereinrichtung unabhängig von seinem augenblicklichen Wert zurückgesetzt wird. Dies bewirkt, daß das aufzuwickelnde Tuch, das sich durch Umwelteinflüsse verlängert hat, erst später den Anschlag erreicht. Beim nächsten Ausfahren der Markise oder dgl. legt der Elektromotor wieder den gleichen Weg vom Anschlag aus zurück und regelt damit die Tuchverlängerung aus. Hat sich aus irgendwelchen Gründen das aufzuwickelnde Tuch verkürzt, wird durch das erfindungsgemäße Verfahren der Anschlag früher erreicht. Der Zählerstand befindet sich also bei größer Null, z.B. bei 15. Auch hier wird beim Erreichen des Anschlages der Zählerwert auf Null rückgesetzt, wodurch bei einem anschließenden Ausfahrvorgang der Elektromotor wieder seinen programmierten Weg zurückfährt und damit die Tuchverkürzung ausregelt. Eine Tuchverkürzung kann deshalb ausgeregelt werden, da bei der Montage der Markisen ohnehin ein oder mehrere Umwicklungen zuviel auf der Markisenachse vorgesehen werden.

In einer anderen Weiterbildung der Erfindung ist vorgesehen, den mechanischen Anschlag der Markise oder dgl. nicht bei jeder Zurückfahrt, also bei jedem Einfahren, der Markise oder dgl. anzulaufen. Dies kann aufgrund der mechanischen Stabilität des Anschlages oder der Zugbänder der Markise oder dgl. vorteilhaft sein, da diese weniger beansprucht werden. Anstelle den Anschlag bei jeder Zurückfahrt anzulaufen, wird kurz vor Erreichen des tatsächlichen Anschlages aufgrund des gegen Null laufenden Zählwertes angehalten. Dies kann beispielsweise bei einem Zählwert von 5 der Fall sein. Um ein Abdriften der beiden Endpunkte zu verhindern, wird ein fester Addierwert in Anschlagrichtung vorgegeben, so daß der Elektromotor erst nach mehreren Auf- und Abbewegungen gegen den mechanischen Anschlag anläuft und erst dann seinen Anschlagsendpunkt neu referenziert.

Vorzugsweise akzeptiert der Elektromotor eine Drehrichtungsumkehr nur, wenn zwischen den Steuerbefehlen mindestens eine vorgegebene Stillstandszeit liegt, die beispielsweise 300 msec. betragen kann. Wird diese Zeit unterschritten, bleibt der Elektromotor stehen, bis ein erneuter Befehl nach dieser Stillstandszeit erfolgt. Einschaltdauern, die kürzer als beispielsweise 300 msec. sind, werden vom Elektromotor bzw. der Steuereinrichtung ignoriert. Dadurch wird gewährleistet, daß die zur Datenspeicherung in die nichtflüchtige Speichereinrichtung benötigte Pufferenergie stets vorhanden ist.

In bevorzugter Weise ist der Antrieb für die Markise oder dgl. als Einsteckrohrantrieb ausgebildet, wobei in dem Rohr des Einsteckrohrantriebes neben dem Motor, Getriebe, Motorkondensator, usw., auch die zugehörende Steuerelektronik für den Antrieb untergebracht ist. Ein solcher Einsteckrohrantrieb unterscheidet sich rein äußerlich von herkömmlichen Einsteckrohrantrieben nicht. Allerdings kann die oft umständliche Einstellung der Wellen-Endschalter, mit denen ein solcher Einsteckrohrantrieb in der Vergangenheit regelmäßig ausgerüstet werden mußte, entfallen.

Das Verfahren nach der Erfindung zum Antreiben von elektromotorisch betriebenen Markisen oder dgl. weist vorzugsweise unterschiedliche Betriebsmodi auf. Neben einem Programmiermodus, in dem die vorzugebende Endstellung der Markise oder dgl. eingegeben wird, verfügt das Verfahren auch über einen Normalmodus, bei dem die Markise oder dgl. aus- und eingefahren wird. Daneben kann auch ein Korrekturmodus vorgesehen werden, in welchem die einmal eingegebene Endstellung korrigierbar ist. Die Endstellung der Markise oder dgl. wird im Programmiermodus vorgegeben. Hierbei wird die Markise oder dgl. zunächst, sofern sich diese noch nicht in der Anfangsstellung befindet, in die Anfangsstellung zurückgefahren. In dieser Anfangsstellung wird die Zählereinrichtung rückgesetzt und anschließend die Markise oder dgl. in die vorzugebende Endstellung gefahren, wobei in der nicht flüchtigen Speichereinrichtung ein diese Endstellung festlegender Zählwert von Impulsen abgespeichert wird.

Die Erfindung wird nachfolgend anhand eines Ausführungsbeispieles im Zusammenhang mit Figuren näher erläutert. Es zeigen:
- Figur 1: ein Blockschaltbild einer möglichen Schaltung zum Betreiben eines Elektromotors, der eine Markise oder dgl. steuert, und
- Figur 2: ein Ablaufdiagramm, nach dem das Blockschaltbild gemäß Figur 1 arbeitet.

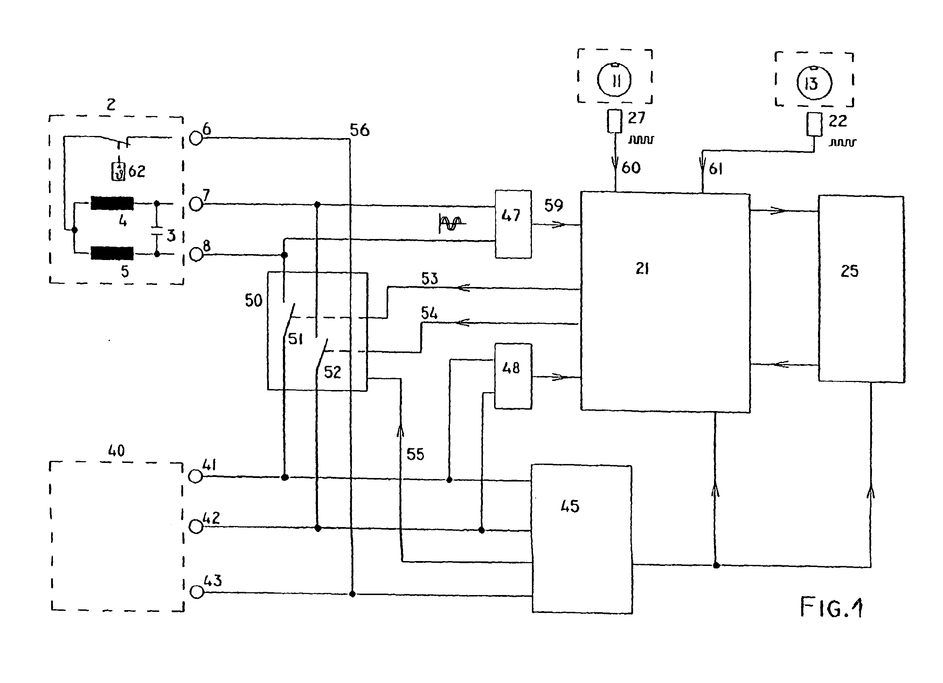

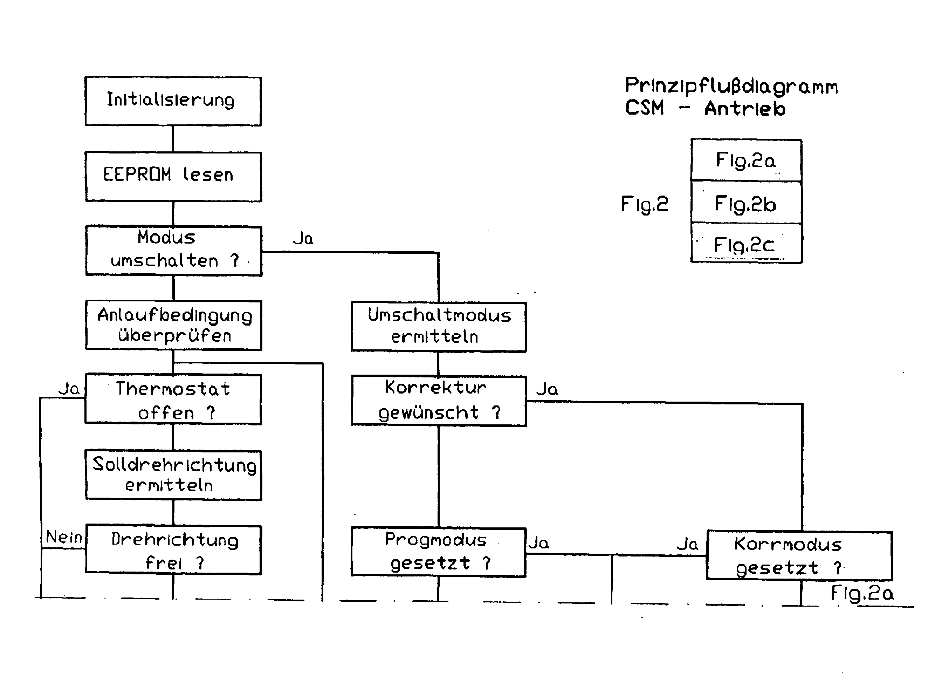

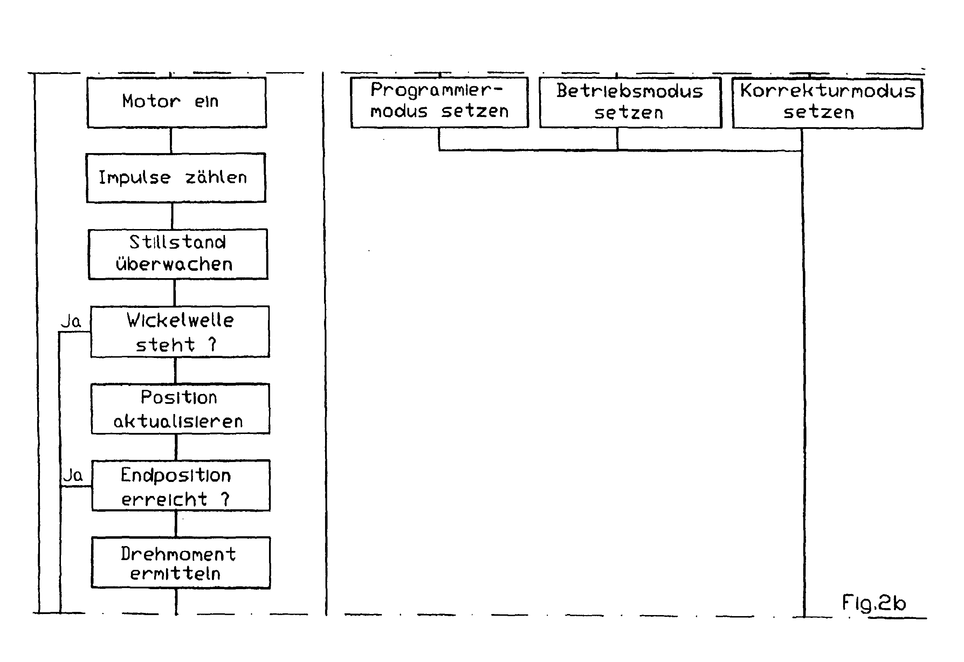

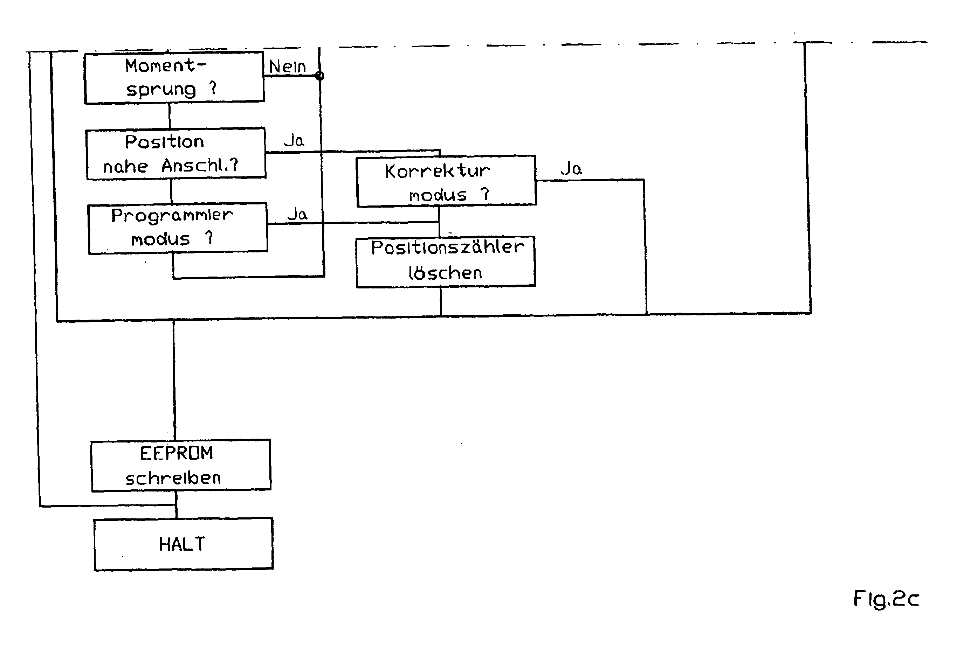

In Figur 1 ist ein mögliches Blockschaltbild der Elektronik gezeigt, um einen Antrieb, z.B. einen Einsteckrohrantrieb, für eine Markise oder dergleichen anzutreiben. Dieses Blockschaltbild unterscheidet sich nicht von dem Blockschaltbild der eingangs genannten DE 44 40 449 A1. Zum Zwecke der Offenbarung wird hiermit ausdrücklich auf diese Veröffentlichung bezug genommen. Der konstruktive Aufbau des in dieser Veröffentlichung beschriebenen und dargestellten Einsteckrohrantriebes gemäß dortiger Figur 1 und Figur 3 ist auch für die vorliegende Erfindung grundsätzlich geeignet. Allerdings arbeitet die dortige Steuereinrichtung bei einem Antrieb nach der vorliegenden Erfindung auf eine andere, im Zusammenhang mit Figur 2 noch näher zu erläuternde Weise.

Wie aus Figur 1 ersichtlich, weist der Elektromotor 2 zwei Motorwicklungen 4, 5 auf, die mit ihrem einen Anschluß miteinander verbunden sind und über einen Motorthermostat 62 an einen Motoranschluß 6 führen. Die beiden anderen Anschlüsse der Motorwicklungen 4, 5 sind über einen Motorkondensator 3 miteinander in Verbindung. Die beiden Klemmen dieses Motorkondensators 3 sind an zwei weitere Motoranschlüsse 7, 8 angeschlossen. Die Motoranschlüsse 6, 7, 8 stehen mit Zuleitungsanschlüssen 41, 42, 43 einer Zuleitung 40 in Verbindung. Die Zuleitung 40 stellt mit ihren Anschlüssen 41, 42 und 43 die notwendigen Ströme für einen Rechts- bzw. Linkslauf des Elektromotors 2 zur Verfügung. Im Ausführungsbeispiel von Figur 1 sind am Zuleitungsanschluß 41 die Phase für Rechtslauf, am Zuleitungsanschluß 42 die Phase für Linkslauf und am Zuleitungsanschluß 43 ein Neutralleiter angeschlossen. Der Motoranschluß 6 ist direkt mit dem Zuleitungsanschluß 43 in Verbindung, während die Motoranschlüsse 7 und 8 jeweils über Schalteinrichtungen 51, 52 mit den Zuleitungsanschlüssen 41, 42 in Verbindung stehen. Die Schalteinrichtungen 51, 52 sind Bestandteil einer Leistungsschalteinrichtung 50. Die Schalteinrichtungen 51, 52 können beispielsweise Relaisschalter sein. Darüber hinaus bietet sich auch eine Ansteuerung mit geeigneten Halbleiterschaltern, beispielsweise Triacs oder Thyristoren an. Der Vorteil von solchen Halbleiterschaltern liegt in der Möglichkeit einer Phasenanschnittsteuerung, durch die das Nennmoment des Elektromotors 2 in gezielter Weise beeinflußt werden kann, um eine Zerstörung des angetriebenen Gegenstandes zu vermeiden.

Der Vorteil einer solchen Verbindung des Elektromotors 2 mit der Zuleitung 40 besteht in der Spannungsfreiheit des Motoranschlusses der jeweiligen Gegenrichtung. Soll beispielsweise der Elektromotor 2 rechts drehen, so würde die Schalteinrichtung 51 geschlossen, während die Schalteinrichtung 52 geöffnet ist. Durch diese Spannungsfreiheit jeweils eines der Zuleitungsanschlüsse 41, bzw. 42 ist eine beliebige Parallelschaltung von Elektromotoren möglich, wodurch höhere Drehmomente und damit größere Lasten durch mehrere Einsteckrohrantriebe bewegt werden können. Gesteuert wird die Leistungsschalteinrichtung 50 durch Steuersignale auf Steuerleitungen 53, 54, die von einer Steuereinrichtung 21 zur Verfügung gestellt werden. Die Steuereinrichtung 21 ist zweckmäßigerweise ein Mikrocontroller bzw. Mikroprozessor mit angeschlossenem, nichtflüchtigem Datenspeicher 25, der beispielsweise als EEPROM ausgebildet sein kann. Der Steuereinrichtung 21 werden verschiedene Sensorsignale zugeführt, um über die Steuerleitungen 53, 54 gezielt die Leistungsschalteinrichtung 50 und damit die Schalteinrichtungen 51, 52 ein- und auszuschalten. Im Ausführungsbeispiel von Figur 1 erhält die Steuereinrichtung 21 drei Sensorsignale, nämlich ein Ist-Signal 59 für die aktuelle Drehmomentbelastung des Elektromotors 3, ein Sensorsignal 60, das die Drehzahl der Antriebswelle 11 repräsentiert und ein Sensorsignal 61, welches ein Maß für die Drehzahl der Wickelwelle 13 ist. Die Sensorsignale 60 und 61 werden durch geeignete Drehzahlsensoreinrichtungen 22, 27, z.B. Hall-Sensoren, zur Verfügung gestellt. Eines dieser Sensorsignale 60, 61 kann beispielsweise durch einen Hall-Sensor bereitgestellt werden, der mit einem magnetischen Polrad gekoppelt ist, welches vom Elektromotor 2 angetrieben wird. Bei Drehung erscheint am Ausgang des Hall-Sensors eine Impulsfolge, deren Impulsabstand ein direktes Maß für die Drehgeschwindigkeit des Elektromotors ist. Darüber hinaus ist die auftretende Anzahl von hintereinander folgenden Impulsen ein direktes Maß für die zurückgelegte Wegstrecke der durch den Elektromotor 2 angetriebenen Markise oder dgl.

Ausdrücklich hinzuweisen ist in diesem Zusammenhang darauf, daß es zur Durchführung des erfindungsgemäßen Verfahrens prinzipiell ausreicht, lediglich die Drehmomentbelastung des Elektromotors 2 zu erfassen und in Form eines Ist-Signales 59 zur Verfügung zu stellen. Die anderen beiden Sensorsignale 60, 61 dienen lediglich für ein noch sichereres Abschalten des Elektromotors und sind damit redundant.

Das Ist-Signal 59, das die Drehmomentbelastung des Elektromotors 2 repräsentiert, wird im Ausführungsbeispiel von Figur 3 durch Einsatz einer Phasendifferenzmeßeinrichtung 47 zur Verfügung gestellt. Diese Phasendifferenzmeßeinrichtung 47, die eingangsseitig mit den Motoranschlüssen 7 und 8 in Verbindung steht, erfaßt den durch die beiden Motorwicklungen 4, 5 fließenden Strom und dessen Phasenverschiebung. Die Phasenverschiebung ist ein Maß für die augenblickliche Drehmomentbelastung des Elektromotors 2. Ein separater Sensor, der möglicherweise umständlich an der Antriebswelle des Elektromotors 2 befestigt werden muß, ist deshalb zur Drehmomenterfassung entbehrlich.

Allerdings ist das erfindungsgemäße Verfahren nicht auf die Drehmomenterfassung mittels Phasendifferenzmessung angewiesen. Vielmehr kann die Belastungserfassung des Elektromotors 2 auch auf jede andere beliebige Weise erfolgen. Wesentlich ist lediglich, daß ein Belastungssprung bzw. ein Drehmomentsprung detektierbar ist, wenn die Markise oder dgl. beim Zurückfahren bzw. Einfahren gegen einen mechanischen Anschlag in der Anfangsstellung der Markise oder dgl. läuft.

Des weiteren ist in Figur 1 noch eine Stromversorgungseinrichtung 45 dargestellt, die eingangsseitig mit den Zuleitungsanschlüssen 41, 42, 43 der Zuleitung 40 in Verbindung steht. Die Stromversorgungseinrichtung 45 dient zur Stromversorgung des nichtflüchtigen Datenspeichers 25, der Steuereinrichtung 21 sowie der Leistungsschaltereinrichtung 50. Schließlich steht die Steuereinrichtung 21 über ein Signalanpaßteil 48 mit den beiden Zuleitungsanschlüssen 41 und 42 in Verbindung.

Die Funktionsweise eines solchen Antriebes für Markisen oder dgl. wird anhand des in Figur 2 dargestellten Ablaufplanes erläutert.

Nach dem Einschalten wird die Versorgungsspannung an die Schaltungsanordnung von Figur 1 angelegt. Zunächst erfolgt eine Initialisierung. Bei dieser Initialisierung wird u.a. die Taktfrequenz für den Mikroprozessor der Steuereinrichtung festgelegt, für die Betriebsweise des Prozessors notwendige Daten eingelesen und die Eingangs- und Ausgangsports festgelegt. Während der Initialisierung erfolgen also grundlegende Einstellungen des Mikroprozessors der Steuereinrichtung, damit diese anschließend arbeiten kann. In einem nächsten Schritt wird die nichtflüchtige Datenspeichereinrichtung 25 von der Steuereinrichtung 21 ausgelesen. Hierbei werden die in der Datenspeichereinrichtung 25 abgespeicherten Wegstreckendaten ausgelesen. Zu den Wegstreckendaten gehören u.a. ein vorgegebener Zählwert, der der Endstellung der Markise oder dgl. entspricht und welcher in einem noch zu erläuternden Programmiermodus festgelegt wurde. Zu den Wegstreckendaten gehört auch der augenblickliche Zählerstand einer in der Steuereinrichtung vorteilhafterweise integrierten Zählereinrichtung. Der augenblickliche Zählerstand dieser Zählereinrichtung ist ein Maß für die augenblickliche Stellung der Markise oder dgl. Damit liest die Steuereinrichtung 21 Daten aus dem nichtflüchtigen Datenspeicher 25, um festzustellen, wo sich im Augenblick die Markise befindet. Darüber hinaus sind in der nichtflüchtigen Datenspeichereinrichtung auch Daten abgelegt über die unmittelbar zuvor aktive Drehrichtung, also links oder rechts. Dies ist notwendig, um nach einem Anhaltevorgang des Elektromotors 2 ein erneutes Anfahren in die gleiche Richtung sperren zu können.

Im nächsten Schritt wird abgefragt, ob der augenblicklich geltende Modus umgeschaltet werden soll. Ist dies nicht der Fall, wird die Anlaufbedingung überprüft, d.h., ob ein Rechtslauf oder Linkslauf des Elektromotors 2 möglich ist. Anschließend wird überprüft, ob der in Figur 1 dargestellte Motorthermostat 62 offen ist oder nicht. Es erfolgt also hier eine Temperaturüberwachung. Ist die Betriebstemperatur im zulässigen Bereich, also der Thermostat geschlossen, wird die Soll-Drehrichtung des Elektromotors 2 ermittelt. Im nächsten Schritt wird abgefragt, ob diese ermittelte Soll-Drehrichtung tatsächlich frei ist. Ist dies der Fall, erfolgt erst das Einschalten des Elektromotors, wodurch dieser in die vorgegebene Richtung dreht.

Die Drehung des Motors führt zu einer Impulsfolge, weil der Elektromotor 2 mit einer Impulserzeugungseinrichtung, z.B. das erwähnte Polrad und den Hall-Sensor, gekoppelt ist. Die Frequenz der aufeinanderfolgenden Impulse ist ein Maß für die Drehgeschwindigkeit des Elektromotors. Die Anzahl der auftretenden Impulse ist ein direktes Maß für die zurückgelegte Wegstrecke des durch den Elektromotor 2 angetriebenen Tuches der Markise oder dgl. In der Steuereinrichtung 21 werden die auftretenden Impulse addiert, wenn die Markise oder dgl. ausgefahren wird. Die Impulse werden dagegen subtrahiert, wenn die Markise oder dgl. eingefahren wird. Die Impulse können beispielsweise bei einer vorgegebenen Drehgeschwindigkeit des Elektromotors 2 im Abstand von 3,5 msec auftreten. Wird beispielsweise angenommen, daß sich die Markise oder dgl. in Anfangsstellung befindet, steht der Zähler der Impulse auf Null. Dreht dann der Elektromotor 2 so, daß die Markise ausgefahren wird, erhöht sich der Zählerstand bis beispielsweise eine vorgegebene Endstellung von 2000 Impulsen erreicht ist. Sobald die Zählereinrichtung den 2000sten Impuls detektiert, wird über die Steuereinrichtung 21 der Elektromotor 2 abgeschaltet.

Während der Elektromotor 2 in die vorgegebene Richtung dreht und die Impulse gezählt werden, wird zusätzlich eine Stillstandsüberwachung durchgeführt. Hierbei wird überprüft, ob die Markise oder dgl. gegen ein Hindernis läuft. Ist dies der Fall, wird der Elektromotor 2 angehalten. Hierfür dient eine Überwachungseinrichtung (Watch-Dog-Schaltung). Diese Überwachungseinrichtung, die sich innerhalb der Steuereinrichtung und damit innerhalb des Mikroprozessors befindet, wird durch das Ausgangssignal der die die Drehung des Elektromotors 2 anzeigenden Impulse generierenden Sensoreinrichtung getriggert. Bei Unterschreiten einer vorgegebenen Drehgeschwindigkeit des Polrades und damit der Drehgeschwindigkeit, z.B. bei Stillstand, wird der Elektromotor abgeschaltet und die augenblicklichen Wegstreckendaten in die nichtflüchtige Speichereinrichtung 25 eingeschrieben. Wenn der Elektromotor 2 und damit die Wickelwelle steht, wird somit das EEPROM mit den augenblicklichen Wegstreckendaten beschrieben und anschließend der Elektromotor angehalten.

Sofern kein Hindernis auftritt, dreht die Wickelwelle am Elektromotor 2 weiter. In diesem Fall wird die Position aktualisiert, d.h. der Zählerstand innerhalb der Zählereinrichtung durch die immer wieder auftretenden Impulse erhöht. Dies geschieht so lange, bis die vorgegebene Endposition, beispielsweise ein Zählerstand von 2000, erreicht ist. Ist diese Endposition erreicht, wird der Elektromotor 2 angehalten.

Es wird angenommen, daß die Markise damit ihre Endstellung, d.h. den voll ausgefahrenen Zustand, erreicht hat. Wird die Markise oder dgl. aus dieser Endstellung zurückgefahren, wird erneut überprüft, ob der Motorthermostat 62 offen ist oder nicht. Anschließend wird die Soll-Drehrichtung ermittelt und überprüft, ob diese Drehrichtung frei ist. Im nächsten Schritt wird der Motor zum Einfahren der Markise oder dgl. eingeschaltet, wobei hier die Drehrichtung umgekehrt zur Ausfahrrichtung der Markise oder dgl. ist. Die Impulse werden dieses Mal rückwärts gezählt bei gleichzeitiger Stillstandsüberwachung. Da die Endposition beim Zurückfahren der Markise oder dgl., also ein Zählerstand von beispielsweise 2000, nicht erreicht wird, wird das Drehmoment des Elektromotors 2 erfaßt. Sofern ein Drehmomentsprung auftritt und sich die Markise nahe am Anschlag befindet, wird, für den Fall daß kein Korrekturmodus aktiviert ist, der Zählerstand der Zählereinrichtung rückgesetzt bzw. gelöscht und damit auf Null gesetzt. Das EEPROM wird mit diesem neuen Zählerwert beschrieben und anschließend der Motor angehalten. Sofern kein Drehmomentensprung auftritt, wird gemäß Figur 2 von der Steuereinrichtung 21 wieder zu dem Ablaufpunkt zurückgesprungen, nachdem die Anlaufbedingung überprüft wird.

Befindet sich bei einem auftretenden Drehmomentsprung die Markise oder dgl. nicht in der Nähe des mechanischen Anschlages an der Anfangsstellung, wird von der Steuereinrichtung 21 abgefragt, ob sich die Anordnung im Programmiermodus befindet. Ist dies nicht der Fall, wird zu dem Ablaufpunkt zurückgesprungen, nachdem die Anlaufbedingung überprüft ist. Befindet sich die Anordnung im Programmiermodus, wird im nächsten Schritt die Zählereinrichtung rückgesetzt, das EEPROM mit diesen Daten beschrieben und anschließend der Motor angehalten.

Wie aus dem Flußdiagramm von Figur 2 ersichtlich, wird bei der Abfrage, ob der Modus umgeschaltet werden soll, der Umschaltmodus ermittelt, sofern diese Abfrage mit ja beantwortet wird. Anschließend wird von der Steuereinrichtung 21 abgefragt, ob eine Korrektur gewünscht ist. Ist dies der Fall, wird eine weitere Abfrage gestartet, dahingehend, ob der Korrekturmodus gesetzt ist. Ist dies nicht der Fall, wird der Korrekturmodus gesetzt, anschließend das EEPROM beschrieben und der Elektromotor 2 angehalten. Ist der Korrekturmodus gesetzt, wird der Betriebsmodus gesetzt und anschließend das EEPROM beschrieben und der Elektromotor 2 angehalten. Sofern keine Korrektur gewünscht wird, wird anschließend abgefragt, ob der Programmiermodus gesetzt ist. Ist dies der Fall, wird der Betriebsmodus gesetzt. Ist dies nicht der Fall, wird der Programmiermodus gesetzt.

Die beiden wichtigsten Modi der Betriebszustände des Elektromotors 2 sind der Programmiermodus und der Normalmodus. Der Programmiermodus dient dazu, den Elektromotor und die Steuereinrichtung in einem Lernvorgang dazu zu bringen, daß die Markise oder dgl. stets in die exakt gleiche Endposition ausgefahren wird, egal ob das auf- oder abzuwickelnde Tuch der Markise oder dgl. aufgrund äußerer Einflüsse verlängert oder verkürzt ist. Im Normalmodus wird diese einmal programmierte Endposition angefahren.

Der Betriebszustand Programmiermodus wird vorzugsweise durch ein kurzes Rucken nach jedem Einschalten der Anordnung angezeigt. Für den Programmiermodus wird der Elektromotor zunächst so bedient, daß sich die Markise oder dgl. am Anschlag und damit in der Anfangsposition befindet. Befindet sich der Elektromotor am Anschlag, kann beispielsweise über ein kurzzeitiges Bestromen beider Steuerleitungen der Elektromotor in den Programmiermodus gesetzt werden. In diesem Programmiermodus kann eine beliebige Position des Elektromotors angefahren werden. Ist diese Position angefahren, wird durch nochmaliges kurzzeitiges Bestromen beider Steuerleitungen der entsprechende Zählerstand, der die Impulse der Drehbewegung des Motors gezählt hat, in dem nichtflüchtigen Datenspeicher, also dem EEPROM, abgespeichert. Im Normalmodus fährt der Antrieb die Wegstrecke vom Anschlag bis zur programmierten Endposition, die durch Erreichen des vorgegebenen Zählerstandes definiert ist. Während der Rückfahrt wird die Belastungsüberwachung, also die Drehmomentüberwachung, vorzugsweise ausgeblendet und erst kurz bevor der Anschlag erreicht wird, wieder aktiviert. Dies hat den Vorteil, daß ein kurzer Drehmomentsprung, wie er beispielsweise bei einer auftretenden Windböe o.ä. an der Markise oder dgl. beobachtbar ist, den Elektromotor nicht zum vorzeitigen Abschalten bringen kann. Sollte der Elektromotor jedoch aufgrund eines Hindernisses blockiert werden, beispielsweise für eine Sekunde, kann durch das Ausbleiben der Impulse registriert werden, daß eine Fehlfunktion aufgetretenist, wodurch der Motor ebenfalls abgeschaltet wird, allerdings ohne die Zählereinrichtung rückzusetzen. Eine erneute Bewegung in diese Richtung ist deshalb möglich.

Allerdings wird beim Auflaufen der Markise auf den Anschlag in Anfangsstellung stets der Zählwert der Zählereinrichtung unabhängig von seinem tatsächlichen Wert zurückgesetzt. Hierdurch wird sichergestellt, daß unabhängig von einer Dehnung oder Schrumpfung des Tuches stets die Markise oder dgl. exakt in die gleiche Endlage ausgefahren wird. Aufgrund der mechanischen Stabilität des Anschlages oder der Zugbänder der Markise oder dgl. kann es von Vorteil sein, den tatsächlichen Anschlag nicht bei jeder Zurückfahrt der Markise oder dgl. anzulaufen. Stattdessen kann kurz vor Erreichen des tatsächlichen Anschlages aufgrund des Zählwertes angehalten werden. Um ein Abdriften der beiden Endpunkte zu verhindern, wird vorzugsweise ein fester Addierwert in die Anschlagrichtung vorgegeben, so daß der Elektromotor erst nach mehreren Auf- und Abbewegungen den tatsächlichen Anschlag anläuft und so seinen Anschlagsendpunkt neu differenziert.

Der Elektromotor ist vorzugsweise mit einem Mitnahmering versehen, der ein magnetisches Polrad antreibt. Dieses bewirkt bei Drehung eine bestimmte Impulsfolge an einem unter dem Polrad angebrachten Sensor, der beispielsweise der bereits erwähnte Hall-Sensor ist. Die Pausenzeit der Impulsfolge ist proportional zur Drehzahl des Wickelwellenmitnahmeringes und somit abhängig von der Bewegung der angetriebenen Markise oder dgl. Die Pausenzeit des Polradsignales triggert eine im Mikroprozessor der Steuereinrichtung ablaufende Überwachungszeit. Dreht sich der Mitnahmering zu langsam oder gar nicht, läuft diese Zeit ab. Der Motor wird dann abgeschaltet und diese Drehrichtung wird gesperrt. Dazu werden die Daten in den nichtflüchtigen Speicher geschrieben. Ist eine Drehrichtungssperre aktiv, kann der Elektromotor nur in Gegenrichtung gefahren werden. Nach einigen Flankenwechseln des Polradsignales in Gegenrichtung wird die zuvor gesperrte Drehrichtung vorzugsweise wieder freigegeben. Der Motor akzeptiert eine Drehrichtungsumkehr nur, wenn zwischen den Steuerbefehlen mindestens 300 msec Stillstandszeit liegt. Wird diese Zeit unterschritten, bleibt der Motor stehen, bis ein erneuter Befehl nach dieser Stillstandszeit erfolgt. Eine Einschaltdauer, die kürzer als beispielsweise 300 msec ist, wird vom Elektromotor ignoriert. Dadurch ist gewährleistet, daß die zur Datenspeicherung benötigte Pufferenergie immer vorhanden ist.

Sofern der Elektromotor in eine Markise eingebaut wird, arbeitet dieser Antrieb folgendermaßen, wenn man davon ausgeht, daß zwei Schalter zur Verfügung stehen. Ein Schalter ist mit einer Beschriftung versehen, die anzeigt, daß die Markise oder dgl. bei Betätigung eingefahren wird. Der andere Schalter ist mit einer geeigneten Beschriftung versehen, die anzeigt, daß die Markise oder dgl. ausgefahren wird. Wird der für das Einfahren vorgesehene Schalter betätigt, zieht der Elektromotor die Markise oder dgl. ein. Beim Erreichen des Anschlages schaltet der Antrieb ab. Nun kann in den Programmiermodus gewechselt werden, der beispielsweise dadurch aktiviert wird, daß beide Schalter kurzzeitig gleichzeitig gedrückt werden. Anschließend ist der Programmiermodus aktiviert. Sofern danach der das Ausfahren bewirkende Schalter betätigt wird, läuft die Markise oder dgl. mit kurzem Rucken an und fährt aus, bis der Benutzer die gewünschte Position erreicht hat, in der die Markise oder dgl. enden soll. Diese Position wird gespeichert, wenn der Benutzer erneut die beiden Schalter gleichzeitig betätigt. Die Steuereinrichtung 21 erkennt, daß nun der Programmiermodus abgeschlossen ist.

Drückt anschließend der Benutzer den das Einfahren aktivierenden Schalter, fährt die Markise oder dgl. ohne Rucken an und der Antrieb bzw. die Markise läuft bis zur Anfangsstellung zurück. In dieser Anfangsstellung läuft der Elektromotor oder die Markise gegen einen Anschlag, was von der Steuereinrichtung, wie erläutert, aufgrund eines auftretenden Belastungssprunges detektiert wird. Will der Benutzer anschließend die Markise wieder ausfahren, betätigt er den entsprechenden Schalter. Die Markise oder dgl. läuft ohne Rucken an und der Antrieb läuft bis zum Erreichen der zuvor programmierten Position.

Die Endstellung kann jederzeit durch Wiederholen dieser Schritte umprogrammiert werden.

Ebenso ist mittels eines Korrekturmodus eine Positionsänderung in vorgegebenen Grenzen durch eine bestimmte Schaltfolge des Bedientasters "Ab" bei ausgefahrener Markise oder dgl. möglich. Auch hierbei wird der Moduswechsel durch kurzes Rucken beim Anfahren angezeigt.

### Bezugszeichenliste

- 2: Elektromotor
- 3: Motorkondensator
- 4: Motorwicklung
- 5: Motorwicklung
- 6: Motoranschluß
- 7: Motoranschluß
- 8: Motoranschluß

- 21: Steuereinrichtung
- 22: erste Drehzahlsensoreinrichtung
- 25: Datenspeicher
- 27: zweite Drehzahlsensoreinrichtung

- 40: Zuleitung
- 41: Zuleitungsanschluß
- 42: Zuleitungsanschluß
- 43: Zuleitungsanschluß
- 45: Stromversorgungseinrichtung
- 47: Phasendifferenzmeßeinrichtung
- 48: Signalanpaßteil

- 50: Leistungs-Schalteinrichtung
- 51: Schaltereinrichtung
- 52: Schaltereinrichtung
- 53: Steuerleitung
- 54: Steuerleitung
- 55: Versorgungsleitung
- 56: Leitung
- 59: Ist-Signal

- 60: Sensorsignal
- 61: Sensorsignal
- 62: Motorthermostat

## Patentansprüche

1. Verfahren zum Antreiben von elektromotorisch betriebenen Markisen oder dgl., bei welchen ein Elektromotor die Markise oder dgl. aus einer eingefahrenen Anfangsstellung in eine ausgefahrene Endstellung und umgekehrt bringt, wobei das Anschlagen der Markise oder dgl. in der Anfangsstellung gegen einen mechanischen Anschlag durch eine Belastungsüberwachung des Elektromotors überwacht und je Umdrehung des Elektromotors eine vorgegebene Anzahl von Impulsen generiert werden, wobei der Elektromotor beim Ausfahren dann abgeschaltet wird, sobald in einer Zählereinrichtung eine vorgegebene, die Endstellung festlegende Impulszahl gezählt ist, und dass der Elektromotor beim Einfahren abgeschaltet und die Zählereinrichtung rückgesetzt wird, sobald ein Anschlagen der Markise oder dgl. in der Anfangsstellung detektiert wird, **dadurch gekennzeichnet, dass** die Belastungsüberwachung während der Hin- und Rückfahrt der Markise oder dgl. ausgeblendet und erst beim Einfahren der Markise oder dgl. kurz vor Erreichen der Anfangsstellung aktiviert wird, wobei der Drehvorgang des Elektromotors beim Ein- und Ausfahren der Markise oder dgl. ebenfalls überwacht wird, und daß der Elektromotor bei einem Stillstand für eine vorgegebene Zeitspanne aufgrund äußerer mechanischer Einflüsse auf die Markise oder dgl. abgeschaltet wird, ohne jedoch die Zählereinrichtung rückzusetzen.

2. Verfahren nach Anspruch 1, **dadurch gekennzeichnet, daß** das Anschlagen der Markise oder dgl. in der Anfangsstellung durch eine Überwachung der Belastung des Elektromotors überwacht wird und das Anschlagen durch Detektion eines Belastungssprunges erkannt wird.

3. Verfahren nach Anspruch 1 oder 2, **dadurch gekennzeichnet, daß** die Zählereinrichtung beim Rücksetzen auf den Zählerstand Null gesetzt wird.

4. Verfahren nach einem der Ansprüche 1 bis 3, **dadurch gekennzeichnet, dass** zur Belastungsüberwachung des Elektromotor dessen Drehmoment überwacht wird.

5. Verfahren nach Anspruch 4, **dadurch gekennzeichnet, dass** der Elektromotor einen Motorkondensator und mindestens zwei Motorwicklungen aufweist und zur Erfassung des Drehmomentes die Phasenverschiebung des durch die mindestens zwei Motorwicklungen fließenden Stromes ausgewertet wird.

6. Verfahren nach einem der Ansprüche 1 bis 5, **dadurch gekennzeichnet, dass** in einer nichtflüchtigen Speichereinrichtung mindestens der für die Endstellung vorgegebene Zählerwert und der zuletzt geltende augenblickliche Zählerstand der Zählereinrichtung als elektronischer Wegelängenmesswert abgespeichert ist.

7. Verfahren nach einem der Ansprüche 1 bis 6, **dadurch gekennzeichnet, daß** der Elektromotor ein magnetisches Polrad antreibt, welches bei Drehung an einem Ausgang einer im Bereich des Polrades angeordneten Sensoreinrichtung eine Impulsfolge erzeugt.

8. Verfahren nach Anspruch 7, **dadurch gekennzeichnet, dass** die Sensoreinrichtung einen Hall-Sensor aufweist.

9. Verfahren nach Anspruch 7 oder 8, **dadurch gekennzeichnet**, das das Ausgangssignal der Sensoreinrichtung eine innerhalb eines Mikroprozessors angeordnete Überwachungseinrichtung triggert, welche bei Unterschreiten einer vorgegebener Drehgeschwindigkeit des Polrades den Elektromotor abschaltet und die augenblicklichen Wegstreckendaten in die nichtflüchtige Speichereinrichtung schreibt.

10. Verfahren nach einem der Ansprüche 1 bis 9, **dadurch gekennzeichnet**, das der Elektromotor nach dem Abschalten ausschließlich in die zur unmittelbar vor dem Abschalten entgegengesetzte Richtung bewegbar ist.

11. Verfahren nach einem der Ansprüche 1 bis 10, **dadurch gekennzeichnet**, das die Endstellung der Markise oder dgl. in einem Programmiermodus vorgegeben wird, bei welchem der Elektromotor zunächst die Markise oder dgl. in die Anfangsstellung fährt, sofern sich die Markise oder dgl. noch nicht in der Anfangsstellung befindet, in dieser Anfangsstellung die Zählereinrichtung rückgesetzt und anschließend die Markise oder dgl. in die vorzugebende Endstellung gefahren wird, wobei in der nichtflüchtigen Speichereinrichtung ein die Endstellung festlegender Zählwert von Impulsen abgespeichert wird.

## Claims

1. A method for actuating awnings or the like operated by electric motor, in which an electric motor moves the awning or the like out of a retracted initial position into an extended end position and vice versa, whereby the striking of the awning or the like in the initial position against a mechanical stop is monitored by a load-monitoring device of the electric motor and for each revolution of the electric motor a predetermined number of pulses are generated, whereby the electric motor is switched off during extension as soon as a predetermined number of pulses establishing the end position is counted in a counter device, and the electric motor is switched off during retraction and the counter device is reset as soon as a striking of the awning or the like in the initial position is detected,
**characterised in that** the monitoring of the loading is masked during the inward and outward movement of the awning or the like and is only activated upon the retraction of the awning or the like or shortly before reaching the initial position, whereby the rotational operation of the electric motor is monitored during the retraction and extension of the awning or the like,
and **in that** the electric motor is switched off during a stoppage for a predetermined time interval on the basis of external mechanical influences on the awning or the like without resetting the counter device.

2. A method according to claim 1,
**characterised in that** the striking of the awning or like in the initial position is monitored by monitoring the loading of the electric motor and the striking is recognised by detecting a jump in loading.

3. A method according to Claim 1 or 2,
**characterised in that** the counter device is set at the counter reading zero when resetting.

4. A method according to one of Claims 1 to 3,
**characterised in that** to monitor the loading of the electric motor its torque is monitored.

5. A method according to Claim 4,
**characterised in that** the electric motor comprises a motor capacitor and at least two motor windings and for recording the torque the phase shift of the current flowing through the at least two motor windings is evaluated.

6. A method according to one of Claims 1 to 5,
**characterised in that** at least the counter value preset for the end position and the last instantaneous counter reading of the counter device is stored as an electronic path length measured value in a non-volatile memory device.

7. A method according to one of claims 1 to 6,
**characterised in that** the electric motor drives a magnetic solenoid which generates a sequence of pulses during rotation at one output of a sensor device disposed in the region of the solenoid.

8. A method according to Claim 8,
**characterised in that** the sensor device comprises a Hall sensor.

9. A method according to Claim 8 or 8,
**characterised in that** the output signal of the sensor device triggers a monitoring device which is disposed inside a microprocessor and which switches off the electric motor when a predetermined rotational speed of the solenoid is fallen short of and writes the instantaneous path data into the non-volatile memory device.

10. A method according to one of Claims 1 to 9,
**characterised in that** after being switched off, the electric motor can be moved exclusively into the direction opposite that directly before switching off.

11. A method according to one of Claims 1 to 10,
**characterised in that** the end position of the awning or the like is preset in a programming mode in which the electric motor firstly moves the awning or the like into the initial position provided that the awning or the like is not yet in the initial position, resets the counter device in this initial position and then the awning or the like is moved into the preset end position, whereby a counted measurand establishing the end position is stored in the non-volatile memory device.

## Revendications

1. Procédé de commande d'un store ou analogue par un moteur électrique selon lequel le moteur électrique le fait passer d'une position initiale rentrée, à une position finale déployée et inversement,
la butée du store ou analogue en position initiale contre une butée mécanique étant contrôlée par un moyen de surveillance de charge du moteur électrique dont chaque rotation du moteur électrique génère un nombre prédéterminé d'impulsions,
le moteur électrique étant coupé lors du déploiement dès qu'une installation de comptage a compté un nombre prédéterminé d'impulsions correspondant à la position finale, alors que lors de la rentrée, le moteur électrique est coupé et l'installation de comptage est remise à l'état initial dès que l'on détecte la venue en butée du store ou analogue dans la position initiale,
**caractérisé en ce que**
le moyen de surveillance de charge est coupé pendant le mouvement d'aller et de retour du store ou analogue et il n'est activé que lors de la rentrée du store ou analogue, juste avant d'atteindre la position initiale, on surveille la rotation du moteur électrique lors du mouvement de rentrée et de sortie du store ou analogue, et
on coupe le moteur électrique lors d'un arrêt pour une durée prédéterminée du fait d'action mécanique sur le store ou analogue sans remettre à zéro l'installation de comptage.

2. Procédé selon la revendication 1,
**caractérisé en ce que**
la venue en butée du store ou analogue en position initiale est surveillée par un moyen de surveillance de la charge du moteur électrique et la venue en butée est reconnue par la détection d'une variation brusque de la charge.

3. Procédé selon l'une quelconque des revendications 1 ou 2,
**caractérisé en ce que**
l'installation de comptage est mise à zéro lors de la remise à l'état initial.

4. Procédé selon l'une quelconque des revendications 1 à 3,
**caractérisé en ce qu'**
on surveille le couple du moteur électrique pour surveiller sa charge.

5. Procédé selon la revendication 4,
**caractérisé en ce que**
le moteur électrique comporte un condensateur de moteur et au moins deux enroulements de moteur et pour saisir le couple on exploite le déphasage du courant traversant au moins l'un des deux enroulements du moteur.

6. Procédé selon l'une quelconque des revendications 1 à 5,
**caractérisé en ce qu'**
une installation de mémoire non volatile enregistre au moins l'état de comptage prédéterminé correspondant à la position finale et le dernier état de comptage instantané, valable de l'installation de comptage comme valeur de mesure de longueur de course électronique.

7. Procédé selon l'une quelconque des revendications 1 à 6,
**caractérisé en ce que**
le moteur électrique entraîne une roue polaire magnétique qui fournit, en sortie pour une rotation, une suite d'impulsions à une installation de capteur prévue au niveau de la roue polaire.

8. Procédé selon la revendication 7,
**caractérisé en ce que**
l'installation de capteurs comporte un capteur Hall.

9. Procédé selon l'une quelconque des revendications 7 ou 8,
**caractérisé en ce que**
le signal de sortie de l'installation de capteur déclenche une installation de surveillance dans un microprocesseur, qui en cas de dépassement vers le bas d'une vitesse de rotation prédéterminée de la roue polaire, coupe le moteur électrique et inscrit les données instantanées du trajet dans une installation de mémoire non volatile.

10. Procédé selon l'une quelconque des revendications 1 à 9,
**caractérisé en ce qu'**
après la coupure, le moteur électrique ne peut fonctionner uniquement que dans la direction opposée à celle qui a précédé directement la coupure.

11. Procédé selon l'une quelconque des revendications 1 à 10,
**caractérisé en ce que**
la position de fin de course du store ou analogue est prédéterminée dans un mode de programme pour lequel le moteur électrique conduit tout d'abord le store ou analogue en position initiale dans la mesure où il ne se trouve pas déjà dans cette position initiale et dans cette position, l'installation de comptage est remise à l'état initial et ensuite le store ou analogue est conduit dans la position de fin de course prédéterminée, l'installation de mémoire non volatile enregistrant un état de comptage d'impulsions fixant la position finale.
